# EUROPÄISCHE PATENTSCHRIFT

(11) **EP 2 481 202 B1**
(45) Veröffentlichungstag und Bekanntmachung des Hinweises auf die Patenterteilung: **27.04.2016**
(21) Anmeldenummer: 10747581.6
(22) Anmeldetag: 07.08.2010
(51) Int. Cl.: H04L 29/08, H04W 4/02, H04L 12/24, G01C 21/20, H04W 4/00

(54) **VERFAHREN ZUM BETREIBEN EINES MOBILEN KOMMUNIKATIONSGERÄTS SOWIE MOBILES KOMMUNIKATIONSGERÄT**
METHOD FOR OPERATING A MOBILE COMMUNICATION DEVICE AND MOBILE COMMUNICATION DEVICE
PROCÉDÉ DE FONCTIONNEMENT D'UN APPAREIL DE COMMUNICATION MOBILE ET APPAREIL DE COMMUNICATION MOBILE

(30) Priorität: 23.09.2009 DE 102009042617
(43) Veröffentlichungstag der Anmeldung: 01.08.2012
(73) Patentinhaber: Audi AG, 85045 Ingolstadt (DE)
(72) Erfinder: SELLSCHOPP, Stefan, 85221 Dachau (DE)
(86) Internationale Anmeldenummer: PCT/EP2010/004842
(87) Internationale Veröffentlichungsnummer: WO 2011/035830

(56) Entgegenhaltungen:
- EP-A1- 1 693 750
- WO-A1-2005/050575
- WO-A2-2006/002048
- US-A1- 2002 068 573
- US-A1- 2003 236 818
- US-A1- 2006 094 445
- US-A1- 2006 246 878

## Beschreibung

Die Erfindung betrifft ein Verfahren zum Betreiben eines mobilen Kommunikationsgeräts mit der Fähigkeit zur Nutzung des Internets.

Unter einem mobilen Kommunikationsgerät wird jegliches Gerät verstanden, das von einem Benutzer mitgeführt werden kann und drahtlos Daten austauscht. Heutige mobile Kommunikationsgeräte gehen in der Regel aus Mobilfunktelefonen hervor, die mit zusätzlichen Funktionen versehen werden.

Insbesondere bei Bewegung mit Transportmitteln kommt dem mobilen Einsatz des Kommunikationsgeräts erhöhte Bedeutung zu. Es kann jedoch sein, dass sich die Umstände der Nutzung dann ändern.

Zum Beispiel kann ein Mobilfunktelefon in einem Kraftfahrzeug eingesetzt werden, wobei es über Bedieneinheiten an dem Kraftfahrzeug bedienbar ist. Hierbei erfolgt eine Kommunikation von Einheiten in dem Kraftfahrzeug mit dem Mobilfunktelefon über Bluetooth^{®}-Schnittstellen. In einem Kraftfahrzeug können Möglichkeiten, welche das Internet bietet, sinnvoll genutzt werden. Zum Beispiel kann zum Zwecke der Navigation ein Streckenplaner des Internets verwendet werden, wobei dann Bilder mit Kartendarstellungen oder auch Fotografien aus dem Weltall aus dem Internet gezogen und im Kraftfahrzeug zur Verfügung gestellt werden können. Insbesondere *Google Earth^{®}* stellt derartige Bilder zur Verfügung. Für das Herunterladen von Daten aus dem Internet zahlt ein Nutzer bei großen Datenmengen nicht unbeträchtliche Beträge. Möglicherweise wird er eine Flatrate nutzen, um nicht im Einzelfall immer Kosten tragen zu müssen. Eine solche Flatrate gilt z. B. für das Inland (aus Sicht des Kunden, der einen Vertrag mit seinem Kommunikationsnetzanbieter abschließt). Begibt sich der Benutzer mit seiner mobilen Kommunikationsgerät ins Ausland, können nicht unbeträchtliche Kosten entstehen.

Bisher gibt es nur eingeschränkte Möglichkeiten, einen Nutzer des Internets unter Verwendung eines mobilen Kommunikationsgeräts vor übermäßigen Kosten zu schützen oder auch nur, ihm die Kosten anzuzeigen.

Die WO 2006/002048A1 offenbart, dass Personen, wie zum Beispiel Eltern, die ihre Kinder überwachen möchten, die Nutzung eines mobilen Kommunikationsgeräts durch andere Personen (im Beispiel durch die Kinder) einschränken können. So kann vorgegeben werden, dass bestimmte Anrufe nur zu bestimmten Zeiten oder nur an bestimmten Orten, die ein Positionssensor des mobilen Kommunikationsgeräts erfasst, getätigt werden dürfen. Gleiches kann bezüglich der Nutzung des Internets durch die überwachten Personen geschehen.

Die US 2006/0246878A1 betrifft den Empfang von Nachrichten durch ein mobiles Kommunikationsgerät, wobei selbigem das Vorliegen von Nachrichten mitgeteilt wird, dann eine Prüfung anhand bestimmter Regeln erfolgt und gegebenenfalls eine Nachricht abgerufen wird. Die Regeln können vorgegeben werden oder auf Grund von Benutzereingaben nach und nach erlernt werden.

Die EP 1 693 750 A1 beschreibt, dass der Empfang von Daten durch ein mobiles Kommunikationsgerät anhand einer Zählung in selbigem und Vergleich mit einem Schwellwert beschränkt werden kann.

Die US 2003/0236818A1 betrifft die Zurverfügungstellung von Navigationsdaten für ein Kraftfahrzeug durch einen Service-Zenter außerhalb des Kraftfahrzeugs. Dem Service-Zenter werden Startort und Zielort für ein Fahrt genannt, und der Service-Zenter übermittelt sodann Daten für eine von ihm berechnete Strecke an das Kraftfahrzeug. Dies geschieht insbesondere auch noch während der Fahrt. Hierbei kann berücksichtigt werden, dass an bestimmten Orten des Kraftfahrzeugs eine Übermittlung von Daten nur in eingeschränktem Maße technisch möglich oder aus Kostengründen erwünscht ist.

Es ist somit Aufgabe der Erfindung, einen Weg aufzuzeigen, eine Internetnutzung über ein mobiles Kommunikationsgerät in einem Kraftfahrzeug effektiver und damit kostengünstiger zu gestalten.

Zur Lösung der Aufgabe stellt die Erfindung ein Verfahren mit den Merkmalen gemäß Patentanspruch 1 bereit.

Zu dem erfindungsgemäßen Verfahren gehört somit, dass zumindest zwei Situationsprofile festgelegt werden, und zwar indem Vorgaben festgelegt werden. Zwei voneinander unterschiedliche Situationsprofile unterscheiden sich jeweils durch eine Vorgabe, durch die das Ausmaß der Internetnutzung bei Nutzung des Internets gemäß dem jeweiligen Recherchenbericht bestimmt wird. Den Situationsprofilen wird jeweils zumindest ein Situationsparameter zugeordnet. Durch diesen bzw. diese Situationsparameter wird eine Situation definiert, und zwar für jedes Situationsprofil eine eigene Situation. Nun wird vor oder bei einer Nutzung des Internets durch das mobile Kommunikationsgerät zu einer gegenwärtigen Situation zumindest ein Situationsparameter ermittelt. Dann werden Daten aus dem Internet heruntergeladen, und zwar in einem Ausmaß, das durch das dem zumindest einen Situationsparameter zugeordnete Situationsprofil vorgegeben ist.

Die Situationsprofile werden durch einen Nutzer des mobilen Kommunikationsgeräts eingestellt.

Im Zusammenhang mit dem Einsatz des mobilen Kommunikationsgeräts in einem Kraftfahrzeug gibt es zentrale Datenverarbeitungseinrichtungen, die zum Kraftfahrzeug zugehörige Daten verwalten. Ein Beispiel ist das durch das Haus der Anmelderin bereitgestellte Portal bei Audi myAudi^{®} mit Benutzerkonten. So ist es vorgesehen, in dieser zentralen Datenverarbeitungseinrichtung auch die Situationsprofile abzulegen. Sie werden dann von dem mobilen Kommunikationsgerät in Abhängigkeit von einem einen Nutzer angebenden Situationsparameter von dem Benutzerkonto abgerufen.

Wie bereits erwähnt, wird typischerweise eine Datenverbindung zwischen dem mobilen Kommunikationsgerät und dem Kraftfahrzeug hergestellt (z. B. über eine Bluetooth^{®}-Schnittstelle). Zum Abrufen von Situationsprofilen von einem Benutzerkonto ist dann unter anderem die Übermittlung einer Kennung des Kraftfahrzeugs an die zentrale Datenverarbeitungseinrichtung notwendig. Die Kennung wird dann aus Einheiten des Kraftfahrzeugs ausgelesen, über die Datenverbindung an das mobile Kommunikationsgerät übermittelt und von diesem dann an die zentrale Datenverarbeitungseinrichtung weitergeleitet. Es erfolgt dann üblicherweise ein Abgleich mit der abgelegten Kennung. Bei diesem sog. "Pairing", also einem Zuordnen eines Benutzerkontos zu einem Kraftfahrzeug, wird typischerweise zusätzlich eine Kennung des mobilen Kommunikationsgeräts übermittelt, also z. B. ebenfalls die IMSI.

Erfindungsgemäß dient also ein Situationsparameter zur Klassifizierung eines Ortes des mobilen Kommunikationsgeräts. Dieser Ort kann durch eine Positionserfassungsvorrichtung erfasst werden. Neuere Kraftfahrzeuge verfügen über derartige Positionserfassungsvorrichtungen.

Durch den Nutzer wird für einen ersten Ort ein erstes Situationsprofil und für einen zweiten Ort ein zweites Situationsprofil eingestellt.

Nach Fahrtbeginn befindet sich das Kraftfahrzeug an dem ersten Ort. Erfindungsgemäß erfolgt dann eine Nutzung des Internets gemäß dem Situationsprofil für den ersten Ort. Bei Weiterfahrt des Kraftfahrzeugs befindet sich das Kraftfahrzeug an dem zweiten Ort. Erfindungsgemäß erfolgt dann eine Nutzung des Internets gemäß dem Situationsprofil für den zweiten Ort. An dem ersten Ort befindet sich das Kraftfahrzeug im Inland und an dem zweiten Ort im Ausland.

Es lässt sich so bestimmten Situationen, die mit unterschiedlichen Rahmenbedingungen einhergehen, ein jeweils maßgeschneidertes Situationsprofil zuordnen. Im obigen Beispiel des Kraftfahrers, der sich im Internet und im Ausland bewegt, aber nur für das Inland einen Flatratevertrag hat, lässt sich als erste Situation definieren, dass sich der Kraftfahrer im Inland befindet, und als zweite Situation, dass er sich im Ausland befindet. Das Ausmaß der Daten, die über das Internet bezogen werden, wird dann beschränkt, sobald sich der Benutzer mit dem mobilen Kommunikationsgerät im Ausland befindet.

Es ist auch möglich, Profile für unterschiedliche Nutzer zu definieren. So wird alternativ oder zusätzlich ein Situationsparameter zur Bezeichnung eines Nutzers des mobilen Kommunikationsgeräts verwendet. Ein solcher Situationsparameter kann beispielsweise durch oder auf einer SIM-Karte (Subscriber Identity Module) für ein Mobilfunktelefon gegeben sein, die ohnehin mit dem mobilen Kommunikationsgerät gekoppelt ist. Beispielsweise kann ein Mobilfunktelefon den Nutzer an seiner IMSI (International Mobile Subscriber Identity) erkennen.

Da insbesondere das Herunterladen von Bildern mit einem großen Datenvolumen einhergeht, unterscheiden sich unterschiedliche Situationsprofile in der Anzahl und Auflösung von bei der Nutzung des Internets herunterzuladenden Bildern, wobei sich die Anzahl durch einen Maßstab einer Kartendarstellung bestimmt, wenn Karten für eine bestimmte Fahrstrecke heruntergeladen werden insbesondere von einem vorbestimmten Server herunterzuladenden Bildern. Die Anzahl kann z. B. bei *Google Earth^{®}* durch den Maßstab einer Kartendarstellung bestimmt sein, wenn Karten für eine bestimmte Fahrstrecke heruntergeladen werden sollen.

Da auch die Nutzung von Audiodaten mit hohen Kosten einher gehen kann, unterscheiden sich unterschiedliche Situationsprofile in der Bitrate, mit der solche Audiodaten heruntergeladen werden, wobei dies insbesondere im Zusammenhang mit einem Streaming-Betrieb sinnvoll ist. Zum Beispiel können bei der Nutzung eines Internetradios je nach Situation besonders stark komprimierte Daten mit keiner oder geringer Kostenpflicht oder wenig komprimierte Daten mit Kostenpflicht heruntergeladen werden. Auch hier kann die Einstellung beim Situationsprofil spezifisch zu einem vorbestimmten Server vorgenommen sein.

Schließlich ist sind bei einer bevorzugten Ausführungsform der Erfindung die Filtereinstellungen für unterschiedliche Situationsprofile unterschiedlich, insbesondere solche, die eine Priorisierung von Informationen betreffen. Dies ist z. B. im Zusammenhang mit dem Herunterladen von Informationen über den Straßenverkehr sinnvoll. Es kann auf einen engen regionalen Bereich hin priorisiert werden, um nur Verkehrsinformationen zu einer bestimmten Region herunterzuladen. Wenn ein größeres Datenvolumen heruntergeladen werden kann, können auch ergänzend Verkehrsinformationen für benachbarte oder insgesamt größere Regionen heruntergeladen werden. Auch dies kann spezifisch zu einem vorbestimmten Dienst der Anbieter eingestellt sein.

Insgesamt können sich unterschiedliche Situationsprofile in generellen Einstellungen unterscheiden, was das Herunterladen von Daten betrifft, solche Einstellungen können aber auch spezifisch für unterschiedliche Dienstanbieter gegeben sein: Es ist möglich, dass die Einstellungen für einen bestimmten Dienstanbieter verschieden von den Einstellungen für einen anderen Dienstanbieter sind. Soll das Datenvolumen beschränkt werden, kann vielleicht ein Dienstanbieter bevorzugt abgefragt werden, während auf Abfragen vom anderen Dienstanbieter eher verzichtet werden kann. Ein Nutzer kann dann pro Dienst spezifische Einstellparameter einstellen, wie sich sein Endgerät bei unterschiedlichen Situationsprofilen verhalten soll.

Grundsätzlich kann ein Situationsprofil an dem mobilen Kommunikationsgerät selbst festgelegt werden, also durch Eingaben, die selbiges empfängt, seien dies Eingaben über eine alphanumerische Tastatur oder Eingaben bei Verwendung einer Menüsteuerung.

Es ist vorteilhaft, wenn ein Nutzer darüber informiert wird, inwieweit die von ihm vorgegebenen Situationsprofile effektiv sind. Daher ist es eine bevorzugte Ausführungsform der Erfindung, dass beim Nutzen des Internets das Datenvolumen der von dem mobilen Kommunikationsgerät aus dem Internet bezogene Daten ermittelt und aufsummiert wird. Dann kann es dem Benutzer mitgeteilt werden.

Die Mitteilung an den Nutzer muss nicht unmittelbar an dem mobilen Kommunikationsgerät erfolgen, sondern die entsprechenden Daten können auch an die zentrale Datenverarbeitungseinrichtung übermittelt werden und von dieser verwaltet werden. Die Daten umfassen somit den Wert für das gerade ermittelte Datenvolumen und/oder auch schon das aufsummierte Datenvolumen.

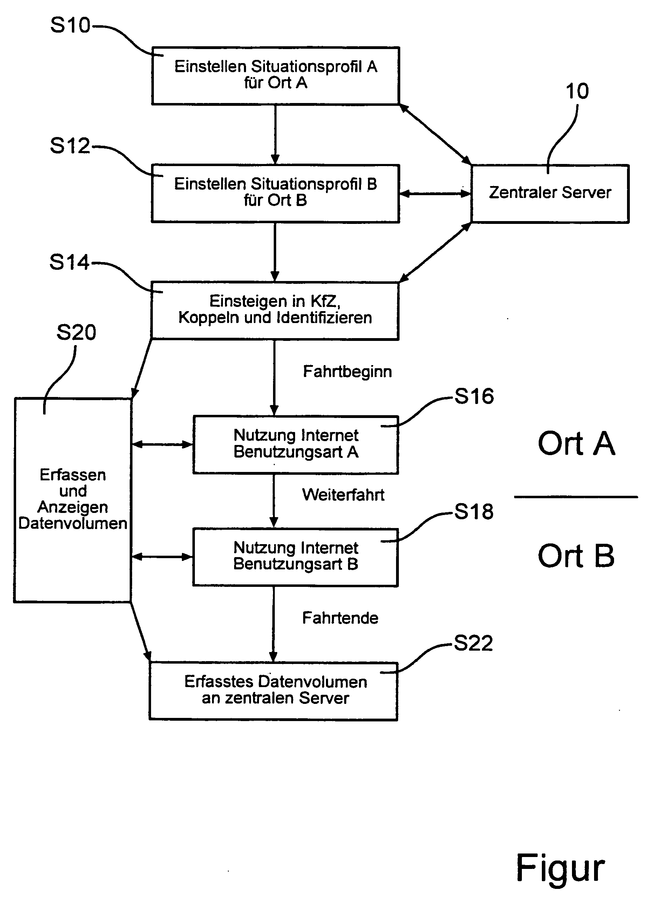

Nachfolgend wird die Erfindung anhand eines in der einzigen Figur gezeigten Ablaufschemas näher erläutert.

Zu Beginn des Verfahrens stellt ein Benutzer Situationsprofile ein. In einem Schritt S10 stellt er ein Situationsprofil für einen Ort A ein, beispielsweise kann dies für die Klasse sämtlicher Orte im Inland sein. In einem Schritt S12 stellt das Situationsprofil B für einen Ort B ein, beispielsweise kann dies für die Klasse sämtlicher Orte im Ausland sein. Das Bereitstellen in den Schritten S10 und S12 erfolgt z. B. über einen Personalcomputer, der mit einem zentralen Server 10 gekoppelt ist. Der zentrale Server sendet hierbei z. B. Masken mit Menüeinträgen an den Personalcomputer, und an dem Personalcomputer werden Eingaben des Benutzers empfangen, seien dies Eingaben über eine alphanumerische Tastatur, seien dies Eingaben über eine Computermaus zur Auswahl eines Menüpunktes etc.

Auf dem zentralen Server kann ein Benutzerkonto abgespeichert sein, und dem Benutzerkonto kann eine Kennung zugeordnet sein. In dem Benutzerkonto sind dann beide Situationsprofile A und B gespeichert.

Im Schritt S14 steigt der Benutzer in sein Kraftfahrzeug ein. Er koppelt ein Mobilfunktelefon mit dem Kraftfahrzeug, indem er dieses zum Beispiel in das Kraftfahrzeug verbringt und eine Einheit im Kraftfahrzeug das Mobilfunktelefon über eine Bluetooth^{®}-Schnittstelle selbsttätig erkennt. Das Kraftfahrzeug übermittelt seine Kraftfahrzeugnummer als Kennung an das Mobilfunktelefon, das diese an den zentralen Server 10 zusammen mit seiner eigenen Kennung, z. B. der IMSI auf seiner SIM, weiterleitet. Der zentrale Server 10 erhält so die Kennung für das Benutzerkonto und kann die beiden Situationsprofile A und B eindeutig dem Kraftfahrzeug zuordnen.

Nach Fahrtbeginn beginnt im Schritt S16 eine Nutzung des Internets. Das Kraftfahrzeug befindet sich zu diesem Zeitpunkt an einem Ort A, sodass die Nutzung des Internets gemäß einer Benutzungsart A erfolgt. Die Benutzungsart A ist durch das Situationsprofil A vorgegeben. Beispielsweise hat der Benutzer einen Vertrag mit seinem Kommunikationsdienstanbieter, der ihm eine Flatrate für die Internetnutzung im Inland zur Verfügung stellt. Bei der Benutzungsart A werden daher alle möglichen Arten von Bildern in einer Anzahl aus dem Internet heruntergeladen, die sinnvoll im Kraftfahrzeug nutzbar sind. Dies kann im Rahmen einer Navigation erfolgen, z. B. können Bilder von *Google Earth^{®}* verwendet werden.

Nach Weiterfahrt befindet sich das Kraftfahrzeug nunmehr am Ort B im Ausland. Im Schritt S18 erfolgt dann die Nutzung des Internets gemäß einer Benutzungsart B. Bei der Benutzungsart B sind beispielsweise nur Bilder in einem großen Kartenmaßstab aus dem Internet herunterzuladen, damit das Datenvolumen klein bleibt. Während der Schritte S16 und S18 erfolgt ständig ein Erfassen und ein Anzeigen des Datenvolumens betreffend die über das Internet an das Mobilfunktelefon übermittelten Daten gemäß Schritt S20. Nach Fahrtende wird das gesamte erfasste Datenvolumen an den zentralen Server übermittelt, siehe Schritt S22.

Das erfindungsgemäße Verfahren ermöglicht somit in der beschriebenen Ausführungsform die Nutzung des Internets gemäß zweier Benutzungsarten (A und B), die durch jeweilige Situationsprofile vorgegeben sind, die an die Erfordernisse des Benutzers maßgeschneidert angepasst sind, insbesondere z. B. an das durch Verträge mit einem oder mehreren Telekommunikationsanbietern gegebene Umfeld. Dem Benutzer steht auch eine Information über das Datenvolumen und damit über die Kosten zur Verfügung.

Benötigt wird zur Vollführung des gerade bestimmten Verfahrens ein Mobilfunktelefon oder allgemein ein mobiles Kommunikationsgerät, das die Fähigkeit zur Nutzung des Internets aufweist, und wobei zwischen Benutzungsarten umschaltbar ist und dies anhand eines Situationsparameters vorgebbar ist. In Kraftfahrzeug kann zum Beispiel eine Positionserfassungsvorrichtung, wie etwa ein GPS-Empfänger einen Situationsparameter vorgeben, in Abhängigkeit von dem das Mobilfunktelefon die Benutzungsart wählt.

## Patentansprüche

1. Verfahren zum Betreiben eines mobilen Kommunikationsgeräts mit der Fähigkeit zur Nutzung des Internets, mit den Schritten:
- Festlegen (S10, S12) von zumindest zwei Situationsprofilen durch Festlegen von Vorgaben, wobei sich zwei unterschiedliche Situationsprofile durch eine Vorgabe unterscheiden, durch welche das Ausmaß der Internetnutzung bei Nutzung des Internets gemäß dem jeweiligen Situationsprofil bestimmt wird, wobei den Situationsprofilen jeweils zumindest ein Situationsparameter zugeordnet wird, durch den bzw. die eine Situation definiert wird, welche für alle Situationsprofile jeweils verschieden ist,
- vor oder bei einer Nutzung des Internets durch das mobile Kommunikationsgerät Ermitteln zumindest eines Situationsparameters zu einer gegenwärtigen Situation und Herunterladen von Daten aus dem Internet (S16, S18) in einem Ausmaß, das durch das dem zumindest einen Situationsparameter zugeordnete Situationsprofil vorgegeben ist, wobeidie Situationsprofile in einer zentralen Datenverarbeitungseinrichtung (10) in einem Benutzerkonto abgelegt werden, wobei
durch einen Nutzer des mobilen Kommunikationsgeräts die Situationsprofile einstellt werden, wobei
- die Situationsprofile von dem mobilen Kommunikationsgerät in Abhängigkeit von einem Situationsparameter, der den Nutzer angibt, von dem Benutzerkonto abgerufen werden, und wobei
- ein Situationsparameter zur Klassifizierung eines Ortes des mobilen Kommunikationsgerätes dient, der durch eine Positionserfassungseinrichtung erfasst wird,
**dadurch gekennzeichnet, dass**
- bei dem Verfahren eine Datenverbindung zwischen dem mobilen Kommunikationsgerät und einem Kraftfahrzeug hergestellt wird (S14) und zum Abrufen von Situationsprofilen von dem Benutzerkonto die Übermittlung der Kennung des Kraftfahrzeugs an die zentrale Datenverarbeitungseinrichtung und ein Abgleich mit einer dort abgelegten Kennung erfolgt, wobei
- durch den Nutzer für einen ersten Ort ein Situationsprofil und für einen zweiten Ort ein anderes Situationsprofil eingestellt wird, wobei
- sich nach Fahrtbeginn das Kraftfahrzeug an dem ersten Ort befindet und eine Nutzung des Internets gemäß dem Situationsprofil für den ersten Ort erfolgt und
- sich bei Weiterfahrt des Kraftfahrzeugs das Kraftfahrzeug an dem zweiten Ort befindet und eine Nutzung des Internets gemäß dem Situationsprofil für den zweiten Ort erfolgt, wobei
- sich das Kraftfahrzeug an dem ersten Ort im Inland und an dem zweiten Ort im Ausland befindet, wobei
- sich die unterschiedlichen Situationsprofile
a) in der Anzahl und Auflösung von bei der Nutzung des Internets herunterzuladenden Bildern unterscheiden, wobei sich die Anzahl durch einen Maßstab einer Kartendarstellung bestimmt, wenn Karten für eine bestimmte Fahrstrecke heruntergeladen werden, und/oder
b) in einer Bitrate beim Herunterladen von Audiodateien unterscheiden.

2. Verfahren nach Anspruch 1, bei dem ein Situationsparameter zur Bezeichnung eines Nutzers des mobilen Kommunikationsgeräts dient.

3. Verfahren nach einem der vorhergehenden Ansprüche, bei dem sich unterschiedliche Situationsprofile in Filtereinstellungen, welche eine Priorisierung von Informationen betreffen, unterscheiden, vorzugsweise jeweils spezifisch zu einem vorbestimmten Datenanbieter.

4. Verfahren nach einem der vorhergehenden Ansprüche, bei dem beim Nutzen des Internets das Datenvolumen der von dem mobilen Kommunikationsgerät aus dem Internet bezogenen Daten ermittelt und vorzugsweise aufsummiert und weiter vorzugsweise einem Benutzer mitgeteilt wird.

5. Verfahren nach Anspruch 4, bei dem der Wert für das ermittelte und/oder aufsummierte Datenvolumen an die zentrale Datenverarbeitungseinrichtung übermittelt wird (S22).

## Claims

1. Method of operating a mobile communication device with the capability of using the internet, with the steps:
- determination (S10, S12) of at least two situation profiles through the determination of specifications, wherein two different profile situations differ through one specification, through which the extent of internet usage when using the internet is determined in accordance with the relevant situation profile, wherein at least one situation parameter is assigned to each situation profile, through which a situation is defined, which for all situation profiles is different in each case,
- before or during use of the internet by the mobile communication device, determination of at least one situation parameter relating to a current situation and downloading of data from the internet (S16, S18) to an extent that is predefined by the situation profile assigned to the at least one situation parameter, wherein the situation profiles are stored in a central dataprocessing installation (10) in a user account, wherein
through a user of the mobile communication device the situation profiles are set, wherein
- the situation profiles are called up from the user account by the mobile communication device as a function of a situation parameter which the user indicates, and wherein
- a situation parameter serves to classify a location of the mobile communication device which is recorded by a position recording device,
**characterised in that**
- in the method a data connection between the mobile communication device and a vehicle is established (S14) and for calling up situation profiles from the user account transfer of the identification of the vehicle to the central dataprocessing device and comparison with the identification stored there take place, wherein
- through the user a situation profile for a first location and for a second location a different situation profile is set, wherein
- after the start of travelling the vehicle is located at a first location and use of the internet takes place in accordance with the situation profile for the first location and
- when the vehicle continues to travel the vehicle is located at a second location and use of the internet takes place in accordance with the situation profile for the second location, wherein
- at the first location the vehicle is located in its home country and at the second location is located abroad, wherein
- the different situation profiles
a) differ in terms of the number and resolution of images to be downloaded when using the internet, wherein the number is determined by a scale of a depicted map if maps are downloaded for a certain travel route, and/or
b) differ in terms of a bit rate when downloading audio files.

2. Method according to claim 1 in which a situation parameters is used to designate a user of the mobile communication device.

3. Method according to any one of the preceding claims in which different situation profiles differ in terms of filter settings which relate to prioritisation of information, preferably specifically in relation to a predetermined data provider.

4. Method according to any one of the preceding claims in which when using the internet the data volume of the data obtained by from the internet by the mobile communication device is determined and preferably added up and also preferably notified to the user.

5. Method according to claim 4 in which the value for the determined and/or added up data volume is forwarded to the central dataprocessing device (S22).

## Revendications

1. Procédé pour faire fonctionner un appareil de communication mobile avec la possibilité d'utiliser Internet, avec les étapes :
- spécification (S10, S12) d'au moins deux profils de situation par spécification d'objectifs, deux profils de situation différents se différenciant par un objectif par lequel l'étendue de l'utilisation d'Internet lors de l'utilisation d'Internet est déterminée selon le profil de situation respectif, à chaque fois au moins un paramètre de situation étant associé aux profils de situation, paramètre ou paramètres de situation par lequel ou lesquels est définie une situation qui est à chaque fois différente pour tous les profils de situation,
- avant ou lors de l'utilisation d'Internet par l'appareil de communication mobile, détermination d'au moins un paramètre de situation pour une situation présente et téléchargement (S16, S18) de données à partir d'Internet dans une mesure qui est prescrite par le profil de situation associé à l'au moins un paramètre de situation, les profils de situation étant enregistrés dans un ordinateur central (10) dans un compte utilisateur,
les profils de situation étant réglés par un utilisateur de l'appareil de communication mobile,
- les profils de situation étant demandés au compte utilisateur par l'appareil de communication mobile en fonction d'un paramètre de situation que l'utilisateur indique et
- un paramètre de situation servant à la classification d'un lieu où se trouve l'appareil de communication mobile, lieu qui est détecté par un dispositif de localisation,
**caractérisé en ce que**
- lors du déplacement, une liaison de données est établie (S14) entre l'appareil de communication mobile et un véhicule automobile et, pour demander des profils de situation au compte utilisateur, il s'effectue une transmission de l'identifiant du véhicule automobile à l'ordinateur central et une mise en correspondance avec un identifiant enregistré là,
à savoir
- l'utilisateur règle un profil de situation pour un premier lieu et un autre profil de situation pour un deuxième lieu,
- après le début du trajet, le véhicule automobile se trouve dans un premier lieu et une utilisation d'Internet s'effectue selon le profil de situation pour le premier lieu et
- lors de la suite du trajet du véhicule automobile, le véhicule automobile se trouve dans le deuxième lieu et une utilisation d'Internet s'effectue selon le profil de situation pour le deuxième lieu,
- le véhicule automobile dans le premier lieu se trouvant en fait dans le pays et le véhicule automobile dans le deuxième lieu se trouvant en fait dans un pays étranger,
- les différents profils de situation
a) se différenciant par le nombre et la résolution d'images à télécharger lors de l'utilisation d'Internet, le nombre se déterminant par une échelle d'une représentation cartographique lorsque des cartes destinées à un certain itinéraire sont téléchargées, et/ou
b) se différenciant par un débit binaire lors du téléchargement de fichiers audio.

2. Procédé selon la revendication 1, selon lequel un paramètre de situation sert à désigner un utilisateur de l'appareil de communication mobile.

3. Procédé selon l'une des revendications précédentes, selon lequel des profils de situation se différencient par des réglages de filtre qui concernent une attribution de priorités à des informations, de préférence à chaque fois de manière spécifique à un fournisseur de données prédéterminé.

4. Procédé selon l'une des revendications précédentes, selon lequel, lors de l'utilisation d'Internet, le volume des données extraites d'Internet par l'appareil de communication mobile est déterminé et de préférence cumulé et aussi de préférence transmis à un utilisateur.

5. Procédé selon la revendication 4, selon lequel la valeur pour le volume de données déterminé et/ou cumulé est transmise (S22) à l'ordinateur central.
